# EUROPÄISCHE PATENTSCHRIFT

(11) **EP 3 430 254 B1**
(45) Veröffentlichungstag und Bekanntmachung des Hinweises auf die Patenterteilung: **08.05.2024**
(21) Anmeldenummer: 17710201.9
(22) Anmeldetag: 09.03.2017
(51) Int. Cl.: F02M 21/02, F02M 31/125, F02M 53/06, F02M 53/02, F02D 19/06, F02N 19/00

(54) **BRENNKRAFTMASCHINE UND VERFAHREN ZUM BETREIBEN EINER BRENNKRAFTMASCHINE**
INTERNAL COMBUSTION ENGINE AND METHOD FOR OPERATING AN INTERNAL COMBUSTION ENGINE
MOTEUR À COMBUSTION INTERNE ET PROCÉDÉ PERMETTANT DE FAIRE FONCTIONNER UN MOTEUR À COMBUSTION INTERNE

(30) Priorität: 18.03.2016 DE 102016105048
(43) Veröffentlichungstag der Anmeldung: 23.01.2019
(73) Patentinhaber: Volkswagen Aktiengesellschaft, 38440 Wolfsburg (DE)
(72) Erfinder: KLÜTING, Christian, 38440 Wolfsburg (DE); WEIßNER, Michael, 38442 Wolfsburg (DE); SCHÜTTENHELM, Martin, 38108 Braunschweig (DE); HELTERHOF, Gunnar, 13437 Berlin (DE)
(74) Vertreter: Bungartz, Florian
(86) Internationale Anmeldenummer: PCT/EP2017/055539
(87) Internationale Veröffentlichungsnummer: WO 2017/157754

(56) Entgegenhaltungen:
- EP-A1- 3 128 166
- EP-A2- 1 418 332
- EP-A2- 1 455 077
- EP-A2- 1 455 077
- WO-A1-2017/140480
- DE-A1- 10 204 746
- DE-A1-102008 056 892
- DE-A1-102008 063 566
- DE-A1-102014 218 632
- US-A- 6 044 825
- US-A1- 2014 303 874

## Beschreibung

Die Erfindung betrifft ein Verfahren zum Betreiben einer Brennkraftmaschine mit einem für den Betrieb mit einem gasförmigen Kraftstoff und konkret Erdgas vorgesehenen Verbrennungsmotor.

Mit gasförmigen Kraftstoffen betriebene Brennkraftmaschinen haben als Antriebsvorrichtungen für Kraftfahrzeuge zunehmend an Bedeutung gewonnen. Dies gilt insbesondere auch für mit Erdgas betriebene Brennkraftmaschinen. Ein wesentlicher Grund dafür liegt in den im Vergleich zu Ottomotoren um ca. 25% geringeren CO₂-Emissionen, die insbesondere in dem besseren Wasserstoff-Kohlenstoff-Verhältnis von Erdgas von bis zu 4 : 1 im Vergleich zu 1,85 : 1 von Ottokraftstoff begründet sind.

Der verbrennungsspezifische Hauptnachteil von Erdgas (und anderen gasförmigen Kraftstoffen) im Vergleich zu flüssigen Kraftstoffen, nämlich der geringere Luftliefergrad aufgrund der Verdrängung von angesaugter Luft durch das gasförmige und damit ein relativ großes Volumen einnehmende Erdgas, der bei Brennkraftmaschinen ohne Aufladung zu einer um ca. 10% bis 15% geringeren Leistung führt, kann in der Regel aufgrund der extrem hohen Klopffestigkeit von Erdgas, die bis zu 130 ROZ beträgt, durch eine entsprechend höhere Verdichtung in Kombination mit einer Aufladung kompensiert oder sogar überkompensiert werden.

Als Kraftstoff wird Erdgas in hoch verdichteter Form unter der Bezeichnung CNG (Compressed Natural Gas) verwendet. Das Erdgas wird dazu unter einem Druck von ca. 200 bar in einem oder mehreren Kraftstoffdrucktanks gespeichert, um möglichst viel Erdgas in den aus Gewichtsgründen und aus Gründen des begrenzten Bauraums in Kraftfahrzeugen hinsichtlich ihrer Tankvolumina eingeschränkten Kraftstoffdrucktanks speichern zu können. Auf diese Weise sollen akzeptable Reichweiten für die damit angetriebenen Kraftfahrzeugen erreicht werden.

Mit Erdgas betriebene Brennkraftmaschinen, die als Antriebsmotoren für Kraftfahrzeuge vorgesehen sind, werden derzeit in drei verschiedenen Varianten angeboten.

Die sogenannten bivalenten Brennkraftmaschinen können alternativ mit Erdgas oder Ottokraftstoff betrieben werden, wobei für beide Kraftstoffarten in der Regel vergleichsweise große Tankvolumina bereitgehalten werden. Die Auslegung der Brennkraftmaschinen erfolgt dabei in der Regel als möglichst optimaler Kompromiss für den Betrieb mit beiden Kraftstoffarten. Nachteilig daran ist, dass dadurch das Potenzial, das Erdgas als Kraftstoff bietet, nicht optimal ausgeschöpft werden kann.

Die sogenannten quasi-monovalenten Brennkraftmaschinen sind dagegen primär für den Betrieb mit Erdgas ausgelegt, können jedoch weiterhin auch mit Ottokraftstoff betrieben werden, weil dafür eigene Kraftstoffversorgungssysteme vorgesehen sind. Die für den Ottokraftstoff vorgesehenen Tanks weisen dabei jedoch in der Regel sehr kleine Tankvolumina auf und ihre Inhalte dienen lediglich als Reserven, um die Gesamtreichweiten für die mittels dieser Brennkraftmaschinen angetriebenen Kraftfahrzeuge zu erhöhen und insbesondere zu ermöglichen, eine der häufig noch relativ wenig verbreiteten Tankstellen, die Erdgas als Kraftstoff anbieten, zu erreichen. Offensichtlicher Vorteil solcher quasi-monovalenter Brennkraftmaschinen liegt in der Möglichkeit, das Potenzial, das Erdgas als Kraftstoff bietet, möglichst optimal ausschöpfen zu können, ohne auf die Reichweite, die lediglich das als Kraftstoff mitgeführte Erdgas ermöglicht, beschränkt zu sein. Nachteilig an solchen Brennkraftmaschinen ist jedoch die Notwendigkeit, zwei unterschiedliche Kraftstoffversorgungssysteme vorsehen zu müssen, wodurch insbesondere die Kosten erhöht werden. Dieser Nachteil gilt selbstverständlich auch für bivalente Brennkraftmaschinen.

Monovalente Brennkraftmaschinen sind dagegen ausschließlich für einen Betrieb mit Erdgas vorgesehen und können dadurch ebenfalls möglichst optimal an dessen Eigenschaften angepasst werden. Zudem werden für solche Brennkraftmaschinen der zusätzliche Aufwand und damit die Kosten sowie der Bauraum für ein zusätzliches Kraftstoffversorgungssystem für Ottokraftstoff vermieden.

Neben dem Problem ausreichender Reichweiten ergibt sich bei Kraftfahrzeugen mit monovalenten Brennkraftmaschinen eine Kaltstartproblematik, die zum einen aus der Speicherung des Erdgases unter hohem Druck von regelmäßig ca. 200 bar in den Kraftstoffdrucktanks und der dadurch erforderlichen Entspannung mittels einer Druckregelvorrichtung auf Werte von ca. 10 bar, die für das Einblasen des Kraftstoffs in beispielsweise ein Saugrohr der Brennkraftmaschine vorgesehen sind, resultiert. Aufgrund des Joule-Thomson-Effekts ist diese Entspannung des Erdgases mit einer erheblichen Temperaturabsenkung verbunden. Dabei kann das Erdgas stromab der Druckregelvorrichtung selbst bei hohen Umgebungstemperaturen Werte von ca. - 25°C aufweisen. Dies führt dazu, dass solche Druckregelvorrichtungen regelmäßig beheizt werden müssen, wozu diese zumeist in das Kühlsystem der Brennkraftmaschine integriert sind. Eine solche Beheizung für eine Druckregelvorrichtung ist jedoch erst wirksam, wenn das Kühlmittel des Kühlsystems eine ausreichend hohe Temperatur aufweist, was nach einem Kaltstart der Brennkraftmaschine bei sehr kalten Umgebungstemperaturen erst verzögert gegeben ist. Weiterhin wirken sich Temperaturen, die deutlich unter 0°C liegen, auch grundsätzlich negativ auf die Funktionsfähigkeit der Komponenten des Kraftstoffversorgungssystems aus. Als problematisch können sich dabei insbesondere Wasser, das während eines vorausgegangenen Betriebs der Brennkraftmaschine in dem Frischgasstrang und insbesondere dem Saugrohr kondensiert ist und das bei entsprechend niedrigen Außentemperaturen verreist, sowie Ablagerungen von Schmiermittel im Frischgasstrang zeigen. Das Schmiermittel kann dabei insbesondere von einem in den Frischgasstrang integrierten Verdichter der Brennkraftmaschine stammen und bei niedrigen Außentemperaturen eine entsprechend hohe Viskosität aufweisen. Eine solche Vereisung von Wasser sowie Ablagerungen von Schmiermittel können insbesondere den Betrieb von Gaseinblasventilen, über die das Erdgas dosiert in beispielsweise ein Saugrohr der Brennkraftmaschine eingeblasen werden soll, negativ beeinflussen.

Für bivalente und quasi-monovalente Brennkraftmaschinen kann die beschriebene Kaltstartproblematik vermieden werden, indem diese nach einem Kaltstart zunächst mit Ottokraftstoff betrieben werden.

Eine mit CNG betriebene Brennkraftmaschine ist beispielsweise aus der WO 2006/084583 A1 bekannt.

Die DE 100 52 336 A1 beschreibt eine Brennkraftmaschine für den Betrieb mit einem gasförmigen Kraftstoff und insbesondere Erdgas, das den Brennräumen unter einem hohen Druck von ca. 200 bar zugeführt und darin mittels einer Vorrichtung, wie beispielsweise einer Glühkerze, gezündet wird.

Die US 2013/0008558 A1 offenbart eine stationäre Tankanlage für eine Gastankstelle, bei der das gespeicherte Gas so gelagert wird, dass ein problemloser Tankvorgang gewährleistet werden kann, wobei insbesondere bei relativ kalten Umgebungstemperaturen eine Mindesttemperatur des Gases nicht unterschritten werden soll. Hierzu kann in die Gasdrucktanks der Anlage eine elektrische Heizvorrichtung integriert sein.

Andere Brennkraftmaschinen sind aus EP 1 455 077 A2, DE 10 2008 063 566 A1, WO 2017/140480 A1 und DE 10 2014 218 632 A1 bekannt.

Ausgehend von diesem Stand der Technik lag der Erfindung die Aufgabe zugrunde, auch bei kalten Umgebungstemperaturen ein ausreichend gutes Kaltstartverhalten für eine mit Erdgas betriebene Brennkraftmaschine zu ermöglichen.

Diese Aufgabe wird mittels eines Verfahrens gemäß dem Patentanspruch 1 gelöst. Bevorzugte Ausführungsformen des erfindungsgemäßen Verfahrens sind Gegenstände der weiteren Patentansprüche und ergeben sich aus der nachfolgenden Beschreibung der Erfindung.

Eine Brennkraftmaschine, die zumindest einen für den Betrieb mit Erdgas vorgesehenen Verbrennungsmotor, dem über einen Frischgasstrang Frischgas (insbesondere Luft) zuführbar ist, weiterhin einen oder mehrere Kraftstoffdrucktanks, in dem oder denen das Erdgas gasförmig gespeichert ist, sowie einen oder mehrere Gaseinblasventile, die über eine Druckregelvorrichtung mit dem oder den Kraftstoffdrucktanks verbindbar sind, umfasst, ist durch Mittel zum Beheizen des oder der Gaseinblasventile und eine (zusätzliche) Heizvorrichtung zum Erwärmen des Erdgases gekennzeichnet. Dabei ist vorgesehen, dass die Heizvorrichtung in die Druckregelvorrichtung integriert ist, da diese ohnehin von dem Erdgas durchströmt wird und mittels dieser eine erhebliche, eine Temperaturabsenkung bewirkende Entspannung des Erdgases bewirkt wird. Auf diese Weise kann nicht nur ein Erwärmen des Erdgases, sondern auch der Druckregelvorrichtung selbst erreicht werden, wodurch eine durch zu niedrige Temperaturen bedingte Fehlfunktion der Druckregelvorrichtung vermieden werden kann.

Eine solche Brennkraftmaschine ermöglicht die Durchführung eines erfindungsgemäßen Verfahrens zum Betreiben einer Brennkraftmaschine, bei dem zumindest temporär vor und/oder während eines Kaltbetriebs das oder die Gaseinblasventile beheizt werden, wobei
- in einem ersten Umgebungstemperaturbereich, der beispielsweise zwischen 0°C und -20°C liegen kann, die Heizvorrichtung nicht in Betrieb genommen wird, wohingegen
- in einem zweiten, kälteren Umgebungstemperaturbereich, der beispielsweise bei -20°C und kälter liegen kann, zusätzlich die Heizvorrichtung in Betrieb genommen wird.

Als "Kaltbetrieb" wird ein Betrieb des Verbrennungsmotors der Brennkraftmaschine verstanden, bei dem dieser oder zumindest eine andere Komponente der Brennkraftmaschine noch eine Betriebstemperatur aufweist, die unterhalb eines dazugehörigen Grenzwerts von beispielsweise 0° liegt. Dabei kann insbesondere vorgesehen sein, dass sich ein Kaltbetrieb unmittelbar an einen Start des Verbrennungsmotors bei entsprechend kalten Umgebungstemperaturen anschließt, wobei der Verbrennungsmotor zuvor solange nicht im Betrieb war, dass sich dessen (Betriebs-)Temperatur bis unterhalb des dazugehörigen Grenzwerts abgesenkt hat. Die (Betriebs-)Temperatur des Verbrennungsmotors oder der entsprechenden Komponenten kann insbesondere anhand der Temperatur eines Kühlmittels, das zur Förderung in einem auch den Verbrennungsmotor umfassenden Kühlsystem vorgesehen ist, und/oder anhand der Temperatur des Gases in der Kraftstoffzuführung, insbesondere in einem Gasverteilerrohr ("Gasrail") der Kraftstoffzuführung, oder der Bauteiltemperatur einer Komponente der Kraftstoffzuführung, insbesondere des Gasverteilerrohrs, bestimmt werden.

Das Erdgas kann in dem oder den Kraftstoffdrucktanks gasförmig unter einem relativ hohen Druck von beispielsweise zwischen ca. 150 bar und ca. 260 bar, vorzugsweise von ca. 200 bar gespeichert sein (CNG).

Der Beginn eines Beheizens des oder der Gaseinblasventile und gegebenenfalls auch eine Inbetriebnahme der Heizvorrichtung kann beispielsweise durch ein Entriegeln oder Öffnen der Fahrertür eines eine erfindungsgemäß betreibbare Brennkraftmaschine umfassenden Kraftfahrzeugs ausgelöst werden. Die Beheizungsmaßnahmen können dann auch wieder beendet werden, wenn nicht innerhalb eines definierten Zeitraums ein Starten der Brennkraftmaschine erfolgt.

Mittels der erfindungsgemäßen, in Abhängigkeit von der Umgebungstemperatur zumindest zweistufigen Beheizung besonders kälteempfindlicher Komponenten der Brennkraftmaschine kann ein sicherer Kaltbetrieb und insbesondere auch ein gutes Kaltstartverhalten der Brennkraftmaschine realisiert werden, wobei gleichzeitig infolge der Abstufung der Beheizungsmaßnahmen der hierfür erforderliche Energieaufwand möglichst gering gehalten wird.

Dies kann sich insbesondere dann positiv auswirken, wenn, wie vorzugsweise vorgesehen, eine Beheizung des oder der Gaseinblasventile und/oder ein Betrieb der Heizvorrichtung auf der Umwandlung von elektrischer Energie in Wärmeenergie beruht, weil dies nicht nur eine schnell wirksam werdende Beheizung ermöglicht, sondern grundsätzlich auch auf relativ einfache konstruktive Weise in das oder die Gaseinblasventile integrierbar ist. Zudem kann für eine elektrische Beheizung vorteilhaft auf ein in der Regel ohnehin vorhandenes elektrisches Netz der Brennkraftmaschine beziehungsweise eines die Brennkraftmaschine integrierenden Kraftfahrzeugs zurückgegriffen werden. Eine elektrische Heizvorrichtung ist weiterhin grundsätzlich gut regelbar.

Für ein elektrisches Beheizen des oder der Gaseinblasventile kann vorzugsweise vorgesehen sein, dass in diese(s) jeweils ein elektrisches Heizelement integriert ist. Ein solches "elektrisches Heizelement", ebenso wie die zum Erwärmen des Erdgases vorgesehene Heizvorrichtung der Brennkraftmaschine, dient erfindungsgemäß ausschließlich oder zumindest primär dem Zweck der Erzeugung von Wärmeenergie durch Umwandlung aus einer anderen Energieform, insbesondere elektrischer Energie. Ein solches elektrisches Heizelement, beispielsweise in Form einer Heizspule, ist einfach und kostengünstig herstellbar und zudem auf relativ einfache Weise in ein Gaseinblasventil integrierbar.

Alternativ oder zusätzlich zu der Integration eines elektrischen Heizelements kann auch vorgesehen sein, ein Beheizen des oder der Gaseinblasventile durch eine Ansteuerung ihrer Aktuatoren zu erreichen, bei der diesen möglichst viel elektrische Energie zugeführt wird, die von diesen in Wärmeenergie umgewandelt wird. Dabei kann insbesondere vorgesehen sein, dass das oder die Gaseinblasventile kontinuierlich voll bestromt werden (d.h. eine Ansteuerung erfolgt zumindest mit einer Stromstärke, die im Normalbetrieb der Brennkraftmaschine (temporär) für ein Öffnen des oder der Gaseinblasventile vorgesehen ist), was insbesondere auch zu einem dauerhaften Offenhalten des oder der Gaseinblasventile führen kann. Eine solche Maßnahme bietet sich insbesondere für ein Beheizen des oder der Gaseinblasventile vor einem Kaltbetrieb und demnach für einen noch folgenden Kaltstart der Brennkraftmaschine an, da es vorteilhaft sein kann, die Gaseinblasventile hierfür zuvor zu evakuieren beziehungsweise zumindest von einer weiteren Zufuhr des Erdgases abzuschneiden, um zu vermeiden, dass durch die geöffnet gehaltenen Gaseinblasventile eine unspezifische Menge von Erdgas in den Verbrennungsmotor oder den Frischgasstrang der Brennkraftmaschine gelangt. Dadurch kann insbesondere ein ungewollt fetter Betrieb des Verbrennungsmotors im und kurz nach dem Kaltstart vermieden werden. Andererseits kann auch vorgesehen sein, das oder die Gaseinblasventile nur so stark (insbesondere dauerhaft) zu bestromen, dass ein Öffnen (gerade noch) nicht erfolgt. In diesem Fall kann insbesondere auch eine vorhergehende Evakuierung oder ein Abschneiden der Gaseinblasventile von einer weiteren Zufuhr des Erdgases entfallen, ohne dass negative Auswirkungen auf die Dosierung des Erdgases zu erwarten sind. Alternativ dazu kann auch vorgesehen sein, das oder die Gaseinblasventile mit Impulsen mit insbesondere voller Stromstärke zu bestromen, wobei die Frequenz und insbesondere der Einschaltanteil derart hoch gewählt ist, dass infolge der mechanischen Trägheit des oder der Gaseinblasventile ein Öffnen im relevanten Ausmaß verhindert wird.

Die für ein Erwärmen des Erdgases vorgesehene Heizvorrichtung kann vorzugsweise ebenfalls als elektrische Heizvorrichtung ausgebildet sein, weil auch dies eine einfache und kostengünstige Integrierbarkeit ermöglicht. Weiterhin ermöglicht eine elektrische Heizvorrichtung auf relativ sichere Weise ein schnelles Erwärmen des Erdgases. Dies stellt einen Vorteil insbesondere im Vergleich zu einer einen Kraftstoff, insbesondere das auch für den Betrieb des Verbrennungsmotors vorgesehene Erdgas, verbrennenden Heizvorrichtung dar, deren freigesetzte Wärmeenergie direkt auf eine das Erdgas führende Komponente einwirkt. Dennoch ist auch eine solche Heizvorrichtung erfindungsgemäß einsetzbar.

In einer bevorzugten Ausgestaltung der erfindungsgemäß betriebenen Brennkraftmaschine kann vorgesehen sein, dass die Druckregelvorrichtung in einen Kreislauf eines Wärmeträgerfluids integriert ist. Besonders bevorzugt kann dieser Kreislauf Teil eines auch den Verbrennungsmotor integrierenden Kühlsystems sein, wobei das in dem Kreislauf geführte Wärmeträgerfluid dann ein Kühlmittel dieses Kühlsystems ist. Dies ermöglicht in vorteilhafter Weise eine (ergänzende) Beheizung der Druckregelvorrichtung durch einen Wärmeübergang von dem Wärmeträgerfluid beziehungsweise dem Kühlmittel auf eine oder mehrere Komponenten der Druckregelvorrichtung und von dieser wiederum auf das Erdgas, wobei dies infolge der relativ starken Temperaturabsenkung, die sich infolge des Joule-Thomson-Effekts im Rahmen der Entspannung des gasförmigen Kraftstoffs mittels der Druckregelvorrichtung einstellt, selbst bei relativ niedrigen Umgebungstemperaturen, insbesondere solchen im erfindungsgemäßen ersten Umgebungstemperaturbereich, wirksam sein kann. Eine solche Integration der Druckregelvorrichtung in einen Kreislauf eines Wärmeträgerfluids und insbesondere in ein Kühlsystems der Brennkraftmaschine kann insbesondere auch ein dauerhaftes Beheizen der Druckregelvorrichtung, insbesondere auch während eines sich an einen Kaltbetrieb anschließenden Warmbetriebs, ermöglichen, ohne dass hierfür zusätzliche Primärenergie aufgewendet werden müsste, weil über das Kühlsystem eigentlich abzuführende Abwärme für das Beheizen des Erdgases mittels der Druckregelvorrichtung genutzt werden kann.

Als "Warmbetrieb" wird ein Betrieb der Brennkraftmaschine verstanden, bei dem die für den Kaltbetrieb vorgesehene Bedingung nicht erfüllt ist.

In einer besonders bevorzugten Ausgestaltung der erfindungsgemäß betriebenen Brennkraftmaschine kann vorgesehen sein, dass in den Kreislauf eines Wärmeträgerfluids und insbesondere in das Kühlsystem der Brennkraftmaschine noch ein Zuheizer, insbesondere ein mit Kraftstoff und vorzugsweise mit dem Erdgas betreibbarer Zuheizer, integriert ist. Ein solcher Zuheizer kann insbesondere dazu dienen, das Wärmeträgerfluid möglichst schnell mit dem primären Ziel eines möglichst schnellen Aufwärmens des Verbrennungsmotors und/oder anderer Komponenten der Brennkraftmaschine sowie insbesondere auch eines Fahrgastinnenraums eines die Brennkraftmaschine umfassenden Kraftfahrzeugs zu erwärmen. Infolge der dann relativ schnell wirksam werdenden Heizwirkung des Wärmeträgerfluids auf die Druckregelvorrichtung kann die Dauer und/oder Leistung, mit der das oder die Gaseinblasventile und/oder das Erdgas (zusätzlich) mittels der vorzugsweise elektrisch betriebenen Heizvorrichtung erwärmt werden, reduziert werden.

Ein erfindungsgemäßer Betrieb einer Brennkraftmaschine vor und/oder während eines Kaltbetriebs kann sich insbesondere bei einer Brennkraftmaschine vorteilhaft auswirken, deren Verbrennungsmotor eine Mehrzahl von Brennräumen ausbildet, wobei jedem der Brennräume mindestens ein Gaseinblasventil zugeordnet ist. Dabei können die Gaseinblasventile beispielsweise derart in den Verbrennungsmotor integriert sein, dass das Erdgas von diesen direkt in die Brennräume eingeblasen wird. Alternativ besteht auch die Möglichkeit, diese in ein Saugrohr des Frischgasstrangs der Brennkraftmaschine zu integrieren, das den letzten Abschnitt des Frischgasstrangs darstellt und in dem die Frischgasströmung auf Teilströmungen, die den einzelnen Brennräumen des Verbrennungsmotors zugeführt werden, aufgeteilt wird, wozu das Saugrohr eine der Anzahl an Brennräumen des Verbrennungsmotors entsprechende Anzahl an Gasführungskanälen ausbilden kann. Jeweils ein Gaseinblasventil kann dann jedem der Gasführungskanäle zugeordnet sein. Gegenüber einer ebenfalls umsetzbaren zentralen Einblasung in das Saugrohr beziehungsweise in einen Abschnitt des Frischgasstrangs stromauf des Saugrohrs kann auf diese Weise eine verbesserte Dosierung des den einzelnen Brennräumen zuzuführenden Erdgases realisiert werden. Weiterhin kann dadurch auch auf relativ einfache Weise eine hohe Regeldynamik erreicht werden. Nachteilig an einer solchen brennraumindividuellen Zuordnung der Gaseinblasventile liegt jedoch darin, dass temperaturbedingt nicht oder nicht richtig funktionierende Gaseinblasventile dazu führen können, dass den diesen zugeordneten Brennräumen kein Erdgas zugeführt wird, was sich besonders negativ auf einen Kaltbetrieb und insbesondere das Kaltstartverhalten der Brennkraftmaschine auswirken kann. Da die Durchführung eines erfindungsgemäßen Verfahrens Probleme während eines Kaltbetriebs und insbesondere während eines Kaltstarts der Brennkraftmaschine vermeidet, können so die Vorteile, die mittels einer brennraumindividuellen Dosierung des Erdgases erreicht werden können, voll ausgeschöpft werden.

In einer bevorzugten Ausführungsform des erfindungsgemäßen Verfahrens kann vorgesehen sein, dass das oder die Gaseinblasventile zunächst mit relativ hoher Leistung und anschließend mit (im Vergleich dazu) relativ geringer Leistung beheizt werden. Der Übergang kann dabei abgestuft (auch nur eine Stufe) oder stufenlos (bei einer elektrischen Beheizung insbesondere mittels grundsätzlich bevorzugter PWM-Ansteuerung einfach umsetzbar) erfolgen. Dabei kann ein Beheizen mit zunächst relativ hoher Leistung insbesondere dazu dienen, die selbst eine geringe Temperatur aufweisenden Gaseinblasventile auf eine Betriebstemperatur zu bringen, die eine im Wesentlichen vollständige Funktionsfähigkeit sicherstellt, während das sich anschließende Beheizen mit relativ geringer Leistung primär dazu dienen kann, diese Funktionsfähigkeit der Gaseinblasventile trotz einer Beaufschlagung durch das noch eine relativ niedrige Temperatur aufweisende Erdgas zu erhalten. Diese Maßnahme kann insbesondere dann sinnvoll oder erforderlich sein, wenn die Umgebungstemperatur relativ niedrig ist. Somit kann besonders bevorzugt vorgesehen sein, dass in einem relativ kalten (zweiten) Teilbereich des ersten Umgebungstemperaturbereich, der beispielsweise zwischen -10°C und -20°C liegen kann, das oder die Gaseinblasventile zunächst mit relativ hoher Leistung und anschließend mit relativ geringer Leistung beheizt werden, während in einem relativ warmen, ersten Teilbereich des ersten Umgebungstemperaturbereichs, der beispielsweise zwischen 0°C und -10°C liegen kann, das oder die Gaseinblasventile bis zur Beendigung der Beheizung mit unveränderter, insbesondere einer der relativ hohen Heizleistung, die für den zweiten Teilbereich vorgesehenen ist, entsprechenden Leistung beheizt werden. Bei einem erfindungsgemäßen Betreiben einer Brennkraftmaschine vor und/oder während eines Kaltbetriebs des Verbrennungsmotors in dem zweiten, kälteren Umgebungstemperaturbereich kann die zweistufige Beheizung der Gaseinblasventile vorzugsweise immer vorgesehen sein.

Für einen möglichst automatischen Betrieb der Brennkraftmaschine weist diese vorzugsweise eine Steuerungsvorrichtung zur automatischen Ansteuerung zumindest des oder der Gaseinblasventile, der Druckregelvorrichtung und der Heizvorrichtung auf, wobei die Steuerungsvorrichtung derart ausgelegt beziehungsweise programmiert ist, dass mittels dieser ein erfindungsgemäßes Verfahren umsetzbar ist beziehungsweise umgesetzt wird. Dabei kann die Steuerungsvorrichtung insbesondere auf die Messwerte zumindest eines, vorzugsweise von mehreren Temperatursensoren zurückgreifen, mittels derer eine Betriebstemperatur der Brennkraftmaschine beziehungsweise zumindest einer Komponente davon (beispielsweise die Temperatur eines Kühlmittels in zumindest einem Abschnitt eines Kühlsystems der Brennkraftmaschine) und/oder die Umgebungstemperatur, insbesondere die Umgebungslufttemperatur, und/oder eine Temperatur des Erdgases ermittelt werden kann.

Die Erfindung betrifft weiterhin ein Kraftfahrzeug mit einer erfindungsgemäß betreibbaren Brennkraftmaschine, wobei die Brennkraftmaschine vorzugsweise zur (direkten oder indirekten) Bereitstellung der Antriebsleistung für das Kraftfahrzeug vorgesehen sein kann. Das Kraftfahrzeug kann vorzugsweise für einen monovalenten Betrieb mit dem Erdgas ausgebildet sein. Möglich ist jedoch auch eine Umsetzung bei einer bivalenten oder quasi-monovalenten Brennkraftmaschine, wenn für diese ein Kaltstarten unter Verwendung des Erdgases bei entsprechend niedrigen Umgebungstemperaturen möglich sein soll.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt, jeweils in schematischer Darstellung:
- Fig. 1:: ein erfindungsgemäß betreibbares Kraftfahrzeug; und
- Fig. 2:: eine erfindungsgemäß betreibbare Brennkraftmaschine.

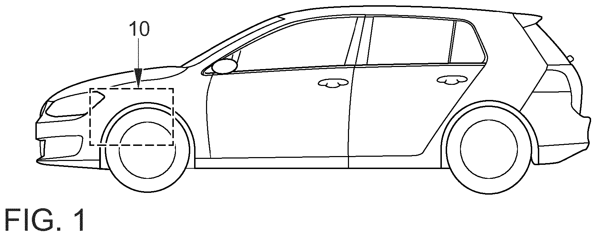

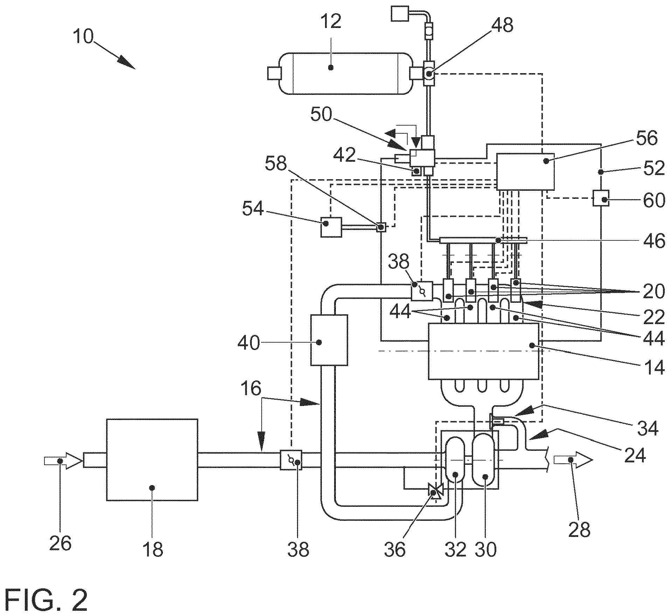

Die Fig. 1 zeigt ein Kraftfahrzeug mit einer erfindungsgemäß betreibbaren Brennkraftmaschine 10, die der direkten Erzeugung einer Fahrantriebsleistung für das Kraftfahrzeug dient. Die Brennkraftmaschine 10 kann dabei gemäß der Fig. 2 ausgebildet sein.

Die in der Fig. 2 dargestellte Brennkraftmaschine 10 ist mit Erdgas, das in einem oder mehreren parallel geschalteten Kraftstoffdrucktanks 12 unter einem relativ hohen Druck von beispielsweise ca. 200 bar gespeichert ist, betreibbar.

Die Brennkraftmaschine 10 umfasst einen nach dem Otto-Prinzip betreibbaren oder als Zündstrahlmotor ausgebildeten (Hubkolben-)Verbrennungsmotor 14 dessen grundsätzlicher Aufbau allgemein bekannt ist. Der Verbrennungsmotor 14 wird über einen Frischgasstrang 16 mit Frischgas, bei dem es sich primär um über einen Luftfilter 18 angesaugte Umgebungsluft 26 handelt, versorgt. In den zu dem Verbrennungsmotor 14 strömenden Frischgasstrom kann mittels Gaseinblasventilen 20, die in ein Saugrohr 22 des Frischgasstrangs 16 integriert sind, dosiert Erdgas eingebracht werden. Die so erzeugte Frischgas-Kraftstoff-Mischung kann dann in dem Verbrennungsmotor 14 verbrannt werden, um mechanische Antriebsleistung bereitzustellen. Das bei der Verbrennung des Frischgas-Kraftstoff-Gemischs entstehende Abgas 28 wird über einen Abgasstrang 24 der Brennkraftmaschine 10 abgeführt und dabei zumindest teilweise über eine Turbine 30 eines Abgasturboladers geführt, wodurch Antriebsleistung für einen Verdichter 32 des Abgasturboladers erzeugt wird. Der Verdichter 32 des Abgasturboladers ist in den Frischgasstrang 16 integriert und dient dazu, das dem Verbrennungsmotor 14 zuzuführende Frischgas mit dem Ziel einer Aufladung der Brennkraftmaschine 10 zu verdichten. Mittels eines sogenannten Wastegates 34 zur bedarfsweisen Umgehung der Turbine 30 und/oder mittels eines Umluftventils 36, das der Vermeidung eines zu großen Druckaufbaus stromab des Verdichters 32 bei geschlossener Drosselklappe 38 dient, wird der von dem Verdichter 32 erzeugte Ladedruck bei einem Betrieb des Verbrennungsmotors 14 mit hoher Last begrenzt und eine Überbelastung des Abgasturboladers und des Verbrennungsmotors 14 verhindert. Zusätzlich oder alternativ zu einer Verwendung des Wastegates 34 kann auch eine Turbine 30 mit variabler Geometrie (VTG) zum Einsatz kommen. Das von dem Verdichter 32 verdichtete Frischgas strömt durch eine Ladeluftstrecke, d.h. den stromab des Verdichters 32 angeordneten Abschnitt des Frischgasstrangs 16, und durchströmt dabei zunächst einen Ladeluftkühler 40 und daraufhin die Drosselklappe 38, die der quantitativen Lastregelung des Verbrennungsmotors 14 dient. Anschließend strömt das Frischgas in das Saugrohr 22, das den letzten Abschnitt des Frischgasstrangs 16 darstellt und in dem die Frischgasströmung auf Teilströmungen, die den einzelnen Brennräumen des Verbrennungsmotors 14 zugeführt werden, aufgeteilt wird, wozu das Saugrohr 22 eine der Anzahl an Zylindern (nicht dargestellt) des Verbrennungsmotors 14 entsprechende Anzahl an Gasführungskanälen 44 ausbildet. Jeweils ein Gaseinblasventil 20 ist jedem der Gasführungskanäle 44 zugeordnet und in einen Anfangsabschnitt des jeweils dazugehörigen Gasführungskanals 44 integriert. Mittels der Gaseinblasventile 20 kann folglich eine für jeden der unter anderem von den Zylindern des Verbrennungsmotors 14 begrenzten Brennräume eine spezifische Erdgasmenge dosiert werden, um eine möglichst optimale und insbesondere effiziente Verbrennung zu erreichen. Alternativ zu einer Anordnung jeweils eines Gaseinblasventils 20 in den Gasführungskanälen 44 kann auch eine zentrale Gaseinblasung in einen vor den Gasführungskanälen 44 liegenden Abschnitt des Frischgasstrangs 16 erfolgen.

Das Erdgas wird den Gaseinblasventilen 20 über ein Gasverteilerrohr 46, ein sogenanntes Gasrail, zugeführt. Dabei weist das Erdgas innerhalb des Gasverteilerrohrs 46 einen Druck von beispielsweise ca. 10 bar auf, wobei die Entspannung des bei ca. 200 bar in dem oder den Kraftstoffdrucktanks 12 gespeicherten Erdgases bis auf diesen Druck von ca. 10 bar zum einen mittels jeweils eines jedem Kraftstoffdrucktank 12 zugeordneten Tankregelventils 48 sowie (primär) mittels einer Druckregelvorrichtung 50 erfolgt. Aufgrund des Joule-Thomson-Effekts ist die Druckregelvorrichtung 50 auf ihrer Niederdruckseite infolge der durch diese bewirkten erheblichen Entspannung mit Erdgas beaufschlagt, das auch in einem Warmbetrieb der Brennkraftmaschine 10 bei relativ hohen Umgebungstemperaturen eine sehr niedrige Temperatur von weit unter 0°C aufweisen kann. Um dennoch eine sichere Funktion der Druckregelvorrichtung 50 zu gewährleisten, ist diese beheizbar ausgeführt und dazu zum einen in einen Kühlkreis eines in der Fig. 2 lediglich stark vereinfacht dargestellten Kühlsystems 52 der Brennkraftmaschine 10 integriert, durch das die Druckregelvorrichtung 50 mit einer Kühlflüssigkeit durchströmt werden kann, deren Temperatur deutlich oberhalb der Temperatur des auf der Niederdruckseite der Druckregelvorrichtung 50 vorhandenen Erdgases und in der Regel auch deutlich oberhalb der Umgebungstemperatur liegen kann.

Da die Kühlflüssigkeit bei sehr kalten Umgebungstemperaturen vor einem Kaltstart der Brennkraftmaschine 10 selbst so geringe Temperaturen aufweisen kann, dass mittels dieser keine ausreichende Beheizung des die Druckregelvorrichtung 50 durchströmenden Erdgases erreicht werden kann, ist für die Druckregelvorrichtung 50 zusätzlich eine elektrische Heizvorrichtung 42 vorgesehen, die insbesondere derart ausgebildet sein kann, dass diese direkt eine Beheizung des Erdgases bewirkt, indem ein elektrisches Heizelement (nicht dargestellt) in dem Erdgasstrom positioniert ist, wobei dies vorzugsweise in einem Abschnitt der Druckregelvorrichtung 50 erfolgt, in dem bereits eine relevante Entspannung des Erdgases mittels der Druckregelvorrichtung 50 erfolgt ist. Alternativ oder zusätzlich zu einer Heizvorrichtung, die eine direkte Beheizung des Erdgases bewirkt, kann auch eine indirekt wirkende Heizvorrichtung vorgesehen sein, die beispielsweise eine zur Strömungsführung des Erdgases genutzte Gehäusekomponente der Druckregelvorrichtung 50 beheizt. Grundsätzlich möglich wäre auch eine Ausgestaltung einer Heizvorrichtung, die die in dem Kühlsystem strömende Kühlflüssigkeit beheizt, wodurch wiederum die Druckregelvorrichtung 50 und über diese das Erdgas beheizt würden. Nachteilig daran wäre jedoch insbesondere die zeitliche Verzögerung der Heizwirkung infolge der thermischen Zwischenschaltung der Kühlflüssigkeit. In diesem Fall sollte die Heizvorrichtung daher zumindest möglichst nah stromauf (bezüglich der Strömungsrichtung der Kühlflüssigkeit) der Druckregelvorrichtung 50 angeordnet sein, um die von dieser erzeugte Wärmeenergie möglichst weitgehend auf die Druckregelvorrichtung 50 und damit das Erdgas übertragen zu können. Unabhängig von dem beschriebenen Ausgestaltungsbeispiel ist es auch möglich, bei einer erfindungsgemäß betreibbaren Brennkraftmaschine eine Heizvorrichtung in einen zusätzlichen, insbesondere die Heizvorrichtung, gegebenenfalls eine Pumpe und die Druckregelvorrichtung 50 ausschließlich integrierenden Temperierkreis zu integrieren, wobei dieser vorzugsweise bedarfsweise aktivierbar ist und dann Kühlflüssigkeit des Kühlsystems in dem Temperierkreis unter Einbindung eines die Druckregelvorrichtung 50 integrierende Abschnitts des Kühlsystems gefördert wird. Vorzugsweise ist dabei der Temperierkreis nur aktiviert, wenn auch die Heizvorrichtung in Betrieb genommen ist.

Neben der in die Druckregelvorrichtung 50 integrierten elektrischen Heizvorrichtung ist bei der Brennkraftmaschine gemäß der Fig. 2 noch ein mit Erdgas betriebener Kraftstoffzuheizer 54, der mit dem Erdgas betreibbar ist, vorgesehen. Dieser ist über ein stromauf der Druckregelvorrichtung 50 angeordnetes Schaltventil 66 in den entsprechenden Kühlkreis des Kühlsystems 52 integrierbar. Die mittels des Kraftstoffzuheizers 54 erzeugte Wärmeenergie wird auf die Kühlflüssigkeit und von dieser teilweise auf die von dem Erdgas durchströmten Gehäusekomponenten der Druckregelvorrichtung 50 übertragen, wodurch diese zu einem Aufwärmen des die Druckregelvorrichtung 50 durchströmenden Erdgases beitragen kann. Zusätzlich dazu dient die von dem Kraftstoffzuheizer 54 erzeugte Wärmeenergie auch dem möglichst schnellen Erreichen eines Betriebstemperaturbereichs für die Kühlflüssigkeit (messbar über einen Temperatursensor 60) und damit insbesondere auch des Verbrennungsmotors 14, wodurch nicht nur der Kraftstoffverbrauch und die Abgasemissionen positiv beeinflusst werden können, sondern auch ein schnelles Aufheizen eines Innenraums eines eine solche Brennkraftmaschine umfassenden Kraftfahrzeugs erreicht werden kann. Infolge der relativ verzögerten Wirkung, die ein solcher Kraftstoffzuheizer 54 auf die Temperatur des Erdgases stromab der Druckregelvorrichtung 50 hat, ist eine Kombination des Kraftstoffzuheizer 54 mit der elektrischen Heizvorrichtung sinnvoll, um einen problemlosen Kaltstart der Brennkraftmaschine 10 bei sehr kalten Umgebungstemperaturen auch ohne längere Wartezeiten realisieren zu können.

Sehr kalte Umgebungstemperaturen wirken sich insbesondere auch negativ auf die Funktionsfähigkeit der Gaseinblasventile 20 aus. Erfindungsgemäß ist daher vorgesehen, dass auch für diese Mittel zum Beheizen vorgesehen sind. Ein Beheizen der Gaseinblasventile 20 kann dabei dadurch erfolgen, dass diese mittels einer dazugehörigen Steuerungsvorrichtung 56, beispielsweise der Motorsteuerung 56 der Brennkraftmaschine 10, derart angesteuert werden, dass diesen möglichst viel elektrische Energie zugeführt wird, die möglichst vollständig in Wärmeenergie umgewandelt wird. Zusätzlich oder alternativ dazu kann in die Gaseinblasventile 20 jeweils auch eine elektrische Heizvorrichtung (nicht dargestellt) integriert sein.

Die Ausgestaltung der Brennkraftmaschine 10 ermöglicht einen problemlosen Kaltstart sowie einen sich an den Kaltstart anschließenden Kaltbetrieb der Brennkraftmaschine 10 auch bei kalten und sehr kalten Umgebungstemperaturen, wobei infolge einer insbesondere in Abhängigkeit von der Umgebungstemperatur abgestuften Beheizung der Gaseinblasventile 20 und des Erdgases lediglich diejenigen Komponenten tatsächlich beheizt werden, für die diese Maßnahme den Umständen entsprechend erforderlich ist.

Dementsprechend ist vorgesehen, dass für einen Kaltstart und während einer ersten, sich an den Kaltstart anschließenden Phase während des Kaltbetriebs der Brennkraftmaschine 10 bei Umgebungstemperaturen, die innerhalb eines ersten Umgebungstemperaturbereichs, der beispielsweise zwischen 0°C und -20°C liegen kann, ausschließlich die Gaseinblasventile 20 beheizt werden, während für die Druckregelvorrichtung 50 keine Beheizung mittels der Heizvorrichtung 42 vorgesehen ist. Dabei kann weiterhin vorgesehen sein, dass innerhalb eines ersten Teilbereichs dieses ersten Umgebungstemperaturbereichs, der beispielsweise zwischen 0°C und -10°C liegen kann, vorgesehen sein kann, die Gaseinblasventile 20 mit gleichbleibender, relativ hoher Leistung bis zu einer relativ frühen Beendigung der Beheizung, insbesondere direkt oder kurz nach einem erfolgten Kaltstart, zu beheizen, während innerhalb eines zweiten Teilbereichs dieses ersten Umgebungstemperaturbereichs, der beispielsweise zwischen -10°C und -20°C liegen kann, vorgesehen sein kann, die Gaseinblasventile 20 zunächst mit einer relativ hohen Leistung zu beheizen, die anschließend reduziert wird. Dabei kann insbesondere vorgesehen sein, dass das zuerst vorgesehene Beheizen mit relativ hoher Leistung bis zu einem Kaltstart der Brennkraftmaschine 10 durchgeführt wird, während direkt mit dem Kaltstart oder kurzfristig danach ein Reduzieren der Heizleistung für die Gaseinblasventile 20 vorgesehen wird. Das Beheizen mit relativ geringer Leistung dient dabei insbesondere dazu, die Betriebstemperatur der Gaseinblasventile 20 im Wesentlichen innerhalb eines definierten Betriebstemperaturbereichs zu halten, obwohl diese mit noch relativ kaltem Erdgas beaufschlagt werden. Dies ist darin begründet, dass eine Beheizung der Druckregelvorrichtung 50, die durch ein Durchströmen der Druckregelvorrichtung 50 mit der Kühlflüssigkeit des entsprechenden Kühlkreises des Kühlsystems bewirkt wird, noch nicht ausreichend wirksam ist und für den einen Kaltbetrieb des Verbrennungsmotors in dem ersten Umgebungstemperaturbereich eine Beheizung der Druckregelvorrichtung 50 und damit des Erdgases mittels der Heizvorrichtung 42 nicht vorgesehen ist.

Bei sehr niedrigen Umgebungstemperaturen und insbesondere auch entsprechend niedrigen Temperaturen der Kühlflüssigkeit sowie der für die Versorgung des Verbrennungsmotors 14 mit dem Erdgas zuständigen Komponenten kann eine alleinige Beheizung der Gaseinblasventile 20, gegebenenfalls auch mit relativ hoher Leistung über den Kaltstart hinaus, nicht ausreichend sein, um einen problemlosen Kaltstart und sich daran anschließenden Kaltbetrieb des Verbrennungsmotors 14 zu gewährleisten. In einem solchen Umgebungstemperaturbereich, der beispielsweise Umgebungstemperaturen ab -20 °C und kälter umfasst, kann vorgesehen sein, neben der beschriebenen Beheizung der Gaseinblasventile 20 zusätzlich noch die Druckregelvorrichtung 50 mittels der Heizvorrichtung 42 zu beheizen, um die Temperatur des Erdgases, mit dem die Gaseinblasventile 20 beaufschlagt werden, zu erhöhen beziehungsweise relativ hoch zu halten. Auch ein Einfrieren der Druckregelvorrichtung 50 kann dadurch verhindert werden.

### BEZUGSZEICHENLISTE

- 10: Brennkraftmaschine
- 12: Kraftstoffdrucktank
- 14: Verbrennungsmotor
- 16: Frischgasstrang
- 18: Luftfilter
- 20: Gaseinblasventil
- 22: Saugrohr
- 24: Abgasstrang
- 26: Umgebungsluft
- 28: Abgas
- 30: Turbine
- 32: Verdichter
- 34: Wastegate
- 36: Umluftventil
- 38: Drosselklappe
- 40: Ladeluftkühler
- 42: Heizvorrichtung
- 44: Gasführungskanal des Saugrohrs
- 46: Gasverteilerrohr
- 48: Tankregelventil
- 50: Druckregelvorrichtung
- 52: Kühlsystem
- 54: Kraftstoffzuheizer
- 56: Steuerungsvorrichtung / Motorsteuerung
- 58: Schaltventil
- 60: Temperatursensor

## Patentansprüche

1. Verfahren zum Betreiben einer Brennkraftmaschine (10) mit einem für den Betrieb mit Erdgas vorgesehenen Verbrennungsmotor (14), dem über einen Frischgasstrang (16) Frischgas zuführbar ist, mit einem oder mehreren Kraftstoffdrucktanks (12), in denen das Erdgas gasförmig gespeichert ist, und mit einem oder mehreren Gaseinblasventilen (20), die über eine Druckregelvorrichtung (50) mit dem oder den Kraftstoffdrucktanks (12) verbindbar sind, wobei Mittel zum Beheizen des oder der Gaseinblasventile (20) und eine Heizvorrichtung (42) zum Erwärmen des Erdgases vorgesehen sind, wobei die Heizvorrichtung (42) in die Druckregelvorrichtung (50) integriert ist, **dadurch gekennzeichnet, dass** vor und/oder während eines Kaltbetriebs des Verbrennungsmotors (14) das oder die Gaseinblasventile (20) beheizt werden, wobei
- in einem ersten Umgebungstemperaturbereich die Heizvorrichtung (42) nicht in Betrieb genommen wird; wohingegen
- in einem zweiten, im Vergleich zu dem ersten Umgebungstemperaturbereich relativ kalten Umgebungstemperaturbereich zusätzlich die Heizvorrichtung (42) in Betrieb genommen wird.

2. Verfahren gemäß Anspruch 1, **dadurch gekennzeichnet, dass** in das oder die Gaseinblasventile (20) jeweils ein elektrisches Heizelement integriert ist.

3. Verfahren gemäß Anspruch 1 oder 2, **dadurch gekennzeichnet, dass** die Heizvorrichtung (42) als elektrische Heizvorrichtung (42) ausgebildet ist.

4. Verfahren gemäß einem der vorhergehenden Ansprüche, **dadurch gekennzeichnet, dass** die Druckregelvorrichtung (50) in einen Kreislauf eines Wärmeträgerfluids integriert ist.

5. Verfahren gemäß Anspruch 4, **dadurch gekennzeichnet, dass** der Kreislauf Teil eines auch den Verbrennungsmotor (14) integrierenden Kühlsystems (52) ist.

6. Verfahren gemäß Anspruch 4 oder 5, **dadurch gekennzeichnet, dass** in den Kreislauf ein Zuheizer (54) integriert ist.

7. Verfahren gemäß einem der vorhergehenden Ansprüche, **dadurch gekennzeichnet, dass** das oder die Gaseinblasventile (20) zunächst mit relativ hoher Leistung und anschließend mit relativ geringer Leistung beheizt werden.

8. Verfahren gemäß Anspruch 7, **dadurch gekennzeichnet, dass**
- in einem ersten Teilbereich des ersten Umgebungstemperaturbereichs das oder die Gaseinblasventile (20) bis zur Beendigung der Beheizung mit unveränderter Leistung beheizt werden und
- in einem zweiten, relativ kalten Teilbereich des ersten Umgebungstemperaturbereichs das oder die Gaseinblasventile (20) zunächst mit relativ hoher Leistung und anschließend mit relativ geringer Leistung beheizt werden.

## Claims

1. Method for operating an internal combustion engine unit (10) comprising an internal combustion engine (14) which is provided for operation with natural gas and to which fresh gas can be supplied via a fresh gas line (16), comprising one or more fuel pressure tanks (12) in which the natural gas is stored in gas form, and comprising one or more gas injection valves (20) which can be connected to the fuel pressure tank(s) (12) via a pressure control device (50), wherein means for heating the gas injection valve(s) (20) and a heating device (42) for heating the natural gas are provided, wherein the heating device (42) is integrated into the pressure control device (50), **characterized in that** the gas injection valve(s) (20) is/are heated before and/or during cold operation of the internal combustion engine (14), wherein
- in a first ambient temperature range, the heating device (42) is not put into operation; whereas
- in a second ambient temperature range that is relatively cold compared with the first ambient temperature range, the heating device (42) is additionally put into operation.

2. Method according to claim 1, **characterized in that** an electrical heating element is integrated into each of the gas injection valve(s) (20).

3. Method according to either claim 1 or claim 2, **characterized in that** the heating device (42) is designed as an electrical heating device (42).

4. Method according to any of the preceding claims, **characterized in that** the pressure control device (50) is integrated into a circuit for a heat transfer fluid.

5. Method according to claim 4, **characterized in that** the circuit is part of a cooling system (52) that also includes the internal combustion engine (14).

6. Method according to either claim 4 or claim 5, **characterized in that** an auxiliary heater (54) is integrated into the circuit.

7. Method according to any of the preceding claims, **characterized in that** the gas injection valve(s) (20) is/are heated initially with a relatively high power and subsequently with a relatively low power.

8. Method according to claim 7, **characterized in that**
- in a first sub-range of the first ambient temperature range, the gas injection valve(s) (20) is/are heated with an unchanged power until the heating ends, and
- in a second, relatively cold sub-range of the first ambient temperature range, the gas injection valve(s) (20) is/are heated initially with a relatively high power and subsequently with a relatively low power.

## Revendications

1. Procédé permettant de faire fonctionner un moteur à combustion interne (10) avec un moteur thermique (14) prévu pour fonctionner avec du gaz naturel, auquel du gaz frais peut être alimenté par l'intermédiaire d'une ligne de gaz frais (16), comportant un ou plusieurs réservoirs de carburant sous pression (12), dans lesquels le gaz naturel est stocké sous forme gazeuse et comportant une ou plusieurs soupapes d'injection de gaz (20), qui peuvent être reliées au ou aux réservoirs de carburant sous pression (12) par l'intermédiaire d'un dispositif de régulation de pression (50), dans lequel des moyens sont prévus pour chauffer la ou les soupapes d'injection de gaz (20) et un dispositif de chauffage (42) est prévu pour réchauffer le gaz naturel, dans lequel le dispositif de chauffage (42) est intégré dans le dispositif de régulation de pression (50), **caractérisé en ce que** avant et/ou pendant un fonctionnement à froid du moteur thermique (14), la ou les soupapes d'injection de gaz (20) sont chauffées, dans lequel
- dans une première plage de température ambiante, le dispositif de chauffage (42) n'est pas mis en fonctionnement ; alors que
- dans une seconde plage de température ambiante, relativement froide par comparaison avec la première plage de température ambiante, le dispositif de chauffage (42) est mis en fonctionnement en plus.

2. Procédé selon la revendication 1, **caractérisé en ce qu'**un élément chauffant électrique est respectivement intégré dans la ou les soupapes d'injection de gaz (20).

3. Procédé selon la revendication 1 ou 2, **caractérisé en ce que** le dispositif de chauffage (42) est conçu comme un dispositif de chauffage électrique (42).

4. Procédé selon l'une des revendications précédentes,
**caractérisé en ce que** le dispositif de régulation de pression (50) est intégré dans un circuit d'un fluide caloporteur.

5. Procédé selon la revendication 4, **caractérisé en ce que** le circuit est une partie d'un système de refroidissement (52) intégrant également le moteur thermique (14).

6. Procédé selon la revendication 4 ou 5, **caractérisé en ce qu'**un dispositif de chauffage d'appoint (54) est intégré dans le circuit.

7. Procédé selon l'une des revendications précédentes, **caractérisé en ce que** la ou les soupapes d'injection de gaz (20) sont d'abord chauffées à une puissance relativement élevée puis à une puissance relativement faible.

8. Procédé selon la revendication 7, **caractérisé en ce que**
- dans une première plage partielle de la première plage de température ambiante, la ou les soupapes d'injection de gaz (20) sont chauffées à une puissance inchangée jusqu'à la fin du chauffage et
- dans une seconde plage partielle relativement froide de la première plage de température ambiante, la ou les soupapes d'injection de gaz (20) sont d'abord chauffées à une puissance relativement élevée puis à une puissance relativement faible.
